# EUROPÄISCHE PATENTSCHRIFT

(11) **EP 3 084 061 B1**
(45) Veröffentlichungstag und Bekanntmachung des Hinweises auf die Patenterteilung: **06.12.2017**
(21) Anmeldenummer: 14812750.9
(22) Anmeldetag: 17.12.2014
(51) Int. Cl.: D06F 39/00, D06F 58/20, D06F 25/00

(54) **VORRICHTUNG UND VERFARHEN ZUR NUTZUNG DER WÄRME VON ABWASSER EINER WÄSCHEBEHANDLUNGSMASCHINE**
DEVICE AND METHOD FOR UTILIZING HEAT FROM WASTEWATER IN A LAUNDRY TREATMENT MACHINE
DISPOSITIF ET PROCÉDÉ PERMETTANT D'UTILISER LA CHALEUR DES EAUX USÉES D'UNE MACHINE DE TRAITEMENT DU LINGE

(30) Priorität: 20.12.2013 DE 102013226960
(43) Veröffentlichungstag der Anmeldung: 26.10.2016
(73) Patentinhaber: BSH Hausgeräte GmbH, 81739 München (DE)
(72) Erfinder: PETERS, Bert, 14656 Brieselang (DE); MOSCHÜTZ, Harald, 14979 Großbeeren (DE)
(86) Internationale Anmeldenummer: PCT/EP2014/078264
(87) Internationale Veröffentlichungsnummer: WO 2015/091671

(56) Entgegenhaltungen:
- EP-A1- 2 562 306
- EP-A2- 2 594 185
- WO-A2-2010/128728
- US-A1- 2005 072 022

## Beschreibung

Die Erfindung betrifft eine Vorrichtung zur Nutzung der Wärme von Abwasser einer Wäschebehandlungsmaschine, umfassend einen Wärmespeicher, welcher mit einer Abwasserleitung verbunden ist, wobei dem Wärmespeicher über die Abwasserleitung erwärmtes Abwasser zuführbar und dabei Restwärme speicherbar ist. Des Weiteren betrifft die Erfindung einen Waschtrockner, sowie ein Verfahren zum Betreiben eines Waschtrockners.

Eine solche Vorrichtung und ein entsprechender Waschtrockner gehen hervor aus der US 2005/0072022 A1. Dieser Veröffentlichung gemäß ist der Wärmespeicher vorgesehen zum Erwärmen von Frischwasser, welches der Wäschebehandlungsmaschine für einen Waschprozess zugeführt wird.

Bei wasserführenden Haushaltsgeräten, wie Spülmaschinen, Waschmaschinen oder auch Waschtrocknern, wird eine Reinigung von Gegenständen, also Geschirr bzw. Wäschestücken, mit Hilfe von erwärmtem und mit Reinigungsmittel versetztem Nutzwasser vollzogen. Während das im Zuge eines Reinigungsprozesses verschmutzte, aber noch warme Wasser in der Vergangenheit üblicherweise als Abwasser aus dem jeweiligen Haushaltsgerät abgeführt wurde, wird inzwischen zur Reduzierung des Energieaufwandes häufig eine zumindest teilweise Speicherung von Restwärme des Abwassers vor dessen Abführen vorgenommen. Diese Restwärme wird dann für einen folgenden Arbeitsprozess oder auch anderweitig genutzt.

Aus der DE 10 2008 054 833 A1 geht eine Vorrichtung zur Nutzung der Wärme von Abwasser eines Haushaltsgeräts hervor, bei welchem es sich um eine Geschirrspül- oder Wäschebehandlungsmaschine handeln kann. Die Vorrichtung umfasst dabei einen Wärmespeicher, welcher mit einer Abwasserleitung des Haushaltsgeräts verbunden ist, wobei dem Wärmespeicher dabei über diese Abwasserleitung erwärmtes Abwasser zugeführt werden kann, um Restwärme des Abwassers zu speichern. Der Wärmespeicher ist dabei derartig gestaltet, dass ein Sammelbehälter für Abwasser einen Nutzwasserbehälter umgibt, um eine Wärmeüberleitung vom Abwasser auf das im Nutzwasserbehälter befindliche Nutzwasser zu ermöglichen. Ausgehend vom Nutzwasserbehälter kann erwärmtes Nutzwasser dann in einen Vorratsbehälter gelangen, welcher wiederum innerhalb des Nutzwasserbehälters liegend definiert ist und aus dem das erwärmte Nutzwasser für den Gebrauch entnommen werden kann.

Ausgehend vom vorstehend beschriebenen Stand der Technik ist es nun eine Aufgabe der vorliegenden Erfindung, eine Vorrichtung zur Nutzung der Wärme von Abwasser zu schaffen, mittels welcher Restwärme von Abwasser für die Erwärmung von Prozessluft genutzt werden kann.

Diese Aufgabe wird ausgehend vom Oberbegriff des ersten unabhängigen Patentanspruchs in Verbindung mit dessen kennzeichnenden Merkmalen gelöst. Die hierauf folgenden, abhängigen Patentansprüche geben jeweils vorteilhafte Weiterbildungen der Erfindung wieder. Ein Waschtrockner, bei welchem eine erfindungsgemäße Vorrichtung zur Anwendung kommt, geht aus entsprechenden Patentansprüchen hervor. Schließlich ist ein Verfahren zum Betreiben eines derartigen Waschtrockners in entsprechenden Patentansprüchen beansprucht.

Gemäß der Erfindung umfasst eine Vorrichtung zur Nutzung der Wärme von Abwasser einer Wäschebehandlungsmaschine einen Wärmespeicher, welcher mit einer Abwasserleitung verbunden ist, wobei dem Wärmespeicher über die Abwasserleitung erwärmtes Abwasser zuführbar ist und dessen Restwärme im Wärmespeicher speicherbar ist.

Im Rahmen der Erfindung ist unter einem "Wärmespeicher" dabei eine Komponente zu verstehen, welche dazu in der Lage ist, Restwärme von an einem Waschprozess der Wäschebehandlungsmaschine beteiligt gewesenen Wasser zumindest kurzfristig zu speichern. Dies kann dabei beispielsweise dadurch erfolgen, dass das erwärmte Abwasser an sich gespeichert oder auch nur dessen Restwärme durch den Wärmespeicher aufgenommen wird.

Ferner sind unter "Abwasser" Flüssigkeiten zu verstehen, welche an mindestens einem Prozessschritt der Wäschebehandlungsmaschine teilgenommen haben bzw. dabei gebildet wurden und üblicherweise verschmutzt sind. So kann es sich bei dem Abwasser insbesondere um Waschlauge handeln, also einem Gemisch aus Wasser und Waschmittel, sowie hierin aufgenommenen Verunreinigungen der Wäschestücke. Eine "Abwasserleitung" bildet dementsprechend eine Leitung der Wäschebehandlungsmaschine, über welche vorgenanntes Abwasser geführt wird.

Die Erfindung umfasst auch die technische Lehre, dass der Wärmespeicher mit einer Prozessluftleitung in einer eine Wärmeleitung ermöglichenden Verbindung steht, um gespeicherte Restwärme in Prozessluft einzuleiten. Mit anderen Worten steht also der Wärmespeicher derartig mit einer Prozessluftleitung in Verbindung, dass im Wärmespeicher aufgenommene Restwärme an über die Prozessluftleitung geführte Prozessluft abgegeben werden kann.

Eine derartige Ausgestaltung einer Vorrichtung hat dabei den Vorteil, dass aufgrund der Koppelung des Wärmespeichers mit einer Prozessluftleitung die Restwärme gezielt für die Erwärmung von Prozessluft genutzt werden kann, über welche dann Wäschestücke im Rahmen eines Trockenprozesses getrocknet werden. In der Folge kann der Energieaufwand insbesondere zu Beginn eines derartigen Trockenprozesses deutlich reduziert werden, indem eben zu Beginn eine Übertragung der gespeicherten Restwärme vollzogen wird. Ggf. kann hierdurch eine ansonsten zum Aufheizen der Prozessluft vorgesehene Heizeinrichtung kleiner dimensioniert werden.

Im Falle der DE 10 2008 054 833 A1 wird die Vorrichtung hingegen zum Aufheizen von Nutzwasser herangezogen, das Aufheizen von Prozessluft ist nicht vorgesehen.

Im Sinne der Erfindung ist unter "Prozessluft" Luft zu verstehen, die im Rahmen eines Trockenprozesses einer Wäschebehandlungsmaschine zum Trocknen von mit Feuchtigkeit beladenen Wäschestücken herangezogen wird. Dabei zirkuliert diese Prozessluft bevorzugt in einem geschlossenen Kreislauf, in dem sie erwärmt, anschließend mit den Wäschestücken in Kontakt gebracht, sowie im Folgenden abgekühlt wird, um die hierin aufgenommene Feuchtigkeit auskondensieren zu lassen. Im Anschluss an das Auskondensieren wird die Prozessluft dann wiederum erwärmt und in Kontakt mit den Wäschestücken gebracht. Alternativ dazu ist es aber auch denkbar, dass stets frische Prozessluft erwärmt, über die zu trocknenden Wäschestücke geleitet und anschließend aus der Wäschebehandlungsmaschine abgeführt wird und im Folgenden nicht mehr an dem Trocknungsprozess teilnimmt.

Besonders bevorzugt kommt eine erfindungsgemäße Vorrichtung zur Nutzung der Wärme von Abwasser einer Wäschebehandlungsmaschine bei einem Waschtrockner zur Anwendung, welcher eine Wäschetrommel zur Aufnahme von Wäschestücken für eine Behandlung in einem Wasch- sowie einem anschließenden Trocknungsprozess aufweist. Mit Hilfe der erfindungsgemäßen Vorrichtung wird dabei dann Restwärme von Abwasser des Waschprozesses für eine Erwärmung von Prozessluft des Trocknungsprozesses genutzt. Unter einem "Waschtrockner" ist erfindungsgemäß die Kombination eines Wäschetrockners mit einer Waschmaschine in einem Gerät zu verstehen. In der Folge wird also innerhalb dieses einen Geräts die Restwärme der im vorausgegangen Waschprozess angefallenen Waschlauge zur Erwärmung der Prozessluft zu Beginn des nachfolgenden Trockenprozesses herangezogen. Eine Prozessluftführung des Waschtrockners kann dabei einem Kondensationstrockner oder auch einem Ablufttrockner nachempfunden sein, wobei jeweils zudem eine Wärmepumpe vorgesehen sein kann.

Prinzipiell ist es im Rahmen der Erfindung aber auch denkbar, dass die erfindungsgemäße Vorrichtung zwischen zwei separaten Geräten, also einer Waschmaschine auf der einen und einem Wäschetrockner auf der anderen Seite, vorgesehen wird. In diesem Fall wird dann die seitens der Waschmaschine angefallene Restwärme für die Erwärmung der Prozessluft auf Seiten des Wäschetrockners genutzt, welcher dabei ebenfalls als Kondensationstrockner oder auch als Ablufttrockner, ggf. mit Wärmepumpe, vorliegen kann.

Entsprechend einer vorteilhaften Ausführungsform eines Waschtrockners zweigt dann die Abwasserleitung, mit welcher der Wärmespeicher der erfindungsgemäßen Vorrichtung verbunden ist, von einer Hauptabwasserleitung ab, wobei die Zuführung von Abwasser zu der Abwasserleitung aus der Hauptabwasserleitung über mindestens ein Ventil regelbar ist. Vorteilhafterweise kann hierdurch eine Zuführung von Abwasser zu dem Wärmespeicher geregelt werden, so dass dieser nur dann mit Abwasser beaufschlagt wird, wenn es für eine Wärmespeicherung sinnvoll ist. So ist es denkbar, dass eine Zuführung von Abwasser zum Wärmespeicher nur dann vollzogen wird, wenn das Abwasser eine gewisse Temperatur aufweist, da z. B. ein Waschprogramm mit einer bestimmten Temperatur gewählt wurde. Zum anderen könnte auch eine zu erwartende Verunreinigung des Abwassers als Kriterium für die Regelung herangezogen werden.

Die Freigabe der Abwasserleitung wird dabei bevorzugt über ein Abwasserventil realisiert, welches im Bereich eines weiteren Abwasserventils angeordnet ist, das bei Freigabe der Abwasserleitung die Hauptabwasserleitung zu einem Abfluss hin sperrt. Besonders bevorzugt können diese beiden Abwasserventile dabei aber auch zu einem Y- bzw. Zweiwegeventil zusammengefasst sein.

Ein Waschtrockner wird bevorzugt derartig betrieben, dass zunächst warmes Abwasser nach einem Waschprozess von in einer Wäschetrommel aufgenommenen Wäschestücken aus der Wäschetrommel abgepumpt und zu einem Wärmespeicher einer erfindungsgemäßen Vorrichtung gefördert wird, in welchem Restwärme des Abwassers gespeichert wird. Im Folgenden wird die gespeicherte Restwärme im Zuge eines auf den Waschprozess folgenden Trockenprozess Prozessluft zugeführt, bevor diese zum Trocknen der Wäschestücke durch die Wäschetrommel hindurchgeführt wird. In Weiterbildung der Erfindung wird das Abwasser dann nach Entzug der Wärme durch den Wärmespeicher oder aber spätestens am Ende des Trockenprozesses abgepumpt.

Entsprechend einer vorteilhaften Ausführungsform der erfindungsgemäßen Vorrichtung ist der Wärmespeicher durch einen Abwassersammelbehälter gebildet, in welchen die Abwasserleitung einmündet und in dem das erwärmte Abwasser gespeichert werden kann. In diesem Fall wird also das Abwasser an sich zwischengespeichert und dessen Restwärme erst mit Beginn einer Wärmeüberleitung auf die Prozessluft entzogen. Besonders bevorzugt ist der Abwassersammelbehälter dabei entsprechend isoliert, so dass eine zu starke Abkühlung des Abwassers verhindert werden kann. Da allerdings insbesondere bei einem Waschtrockner der Trockenprozess unmittelbar auf den jeweiligen Waschprozess folgt, muss diese Isolierung nicht sonderlich aufwändig gestaltet sein, da auch die zwischengespeicherte Energie nur einen relativ kurzen Zeitraum vorgehalten werden muss. Des Weiteren ist ein derartiger Abwassersammelbehälter bevorzugt mit einer Überlaufleitung versehen, wodurch bei Zuführung einer zu großen Abwassermenge kein Druckaufbau im Sammelbehälter stattfinden kann.

Alternativ zu der vorgenannten Ausführungsform ist der Wärmespeicher durch einen latenten Wärmespeicher mit einem Speichermedium gebildet, durch welchen die Abwasserleitung hindurchgeführt ist. Die Restwärme des Abwassers kann dann durch das Speichermedium gespeichert werden, bei welchem es sich insbesondere um ein Phasenwechselmaterial (PCM), beispielsweise in Form von Paraffinen, handelt. Die Speichertemperatur, also beispielsweise Schmelztemperatur des Speichermediums, sollte dabei niedriger gewählt werden, als die Abwassertemperatur des Waschprogramms mit der niedrigsten Waschtemperatur, aus welchem Restwärme genutzt werden soll. Dabei kann die Temperatur im Bereich zwischen 25 °C und 60 °C liegen. Ein Austausch des Abwassers mit dem Speichermedium wird dabei bevorzugt an einem Wärmetauscher vollzogen, welcher in den Wärmespeicher aufgenommen ist. Auch mittels einer derartigen Ausgestaltung der erfindungsgemäßen Vorrichtung kann eine zuverlässige Speicherung von Restwärme des Abwassers vollzogen werden. Gegebenenfalls ist eine entsprechende Isolierung des latenten Wärmespeichers vorzusehen.

In Weiterbildung der Erfindung ist die Verbindung zwischen dem Wärmespeicher und der Prozessluftleitung über einen Wasserkreislauf hergestellt, welcher mit der Prozessluftleitung über einen Wärmetauscher in Verbindung steht. Im Falle einer Ausführung des Wärmespeichers als Abwassersammelbehälter kann in diesem Wasserkreislauf dann das Abwasser selbst zirkulieren, indem es zwischen dem Abwassersammelbehälter und dem Wärmetauscher umgepumpt wird. Alternativ dazu kann allerdings ein separater Wasserkreislauf vorgesehen sein, welcher über Leiterschleifen durch den Wärmespeicher hindurchgeführt ist. Im Falle der Verwendung eines Wasserkreislaufs wird eine Speicherung von Restwärme im Wärmespeicher allerdings bevorzugt nur bei einer höheren Temperatur vollzogen, damit möglichst viel Energie in die Prozessluftleitung übertragen werden kann. Hierbei findet insbesondere eine Speicherung von Restwärme nicht statt, wenn ein Waschprogramm mit einer Waschtemperatur unterhalb von 40° Grad gewählt worden ist.

Entsprechend einer alternativen Ausgestaltungsmöglichkeit einer erfindungsgemäßen Vorrichtung ist die Verbindung zwischen dem Wärmespeicher und der Prozessluftleitung über einen Kältemittelkreislauf einer Wärmepumpe hergestellt. In Weiterbildung dieser Ausgestaltung ist der Wärmespeicher mit einem Nebenzweig des Kältemittelkreislaufs verbunden, welcher vor einem Verdampfer von einem Hauptzweig abzweigt und vor einem Kompressor wieder in den Hauptzweig einmündet. In diesem Fall wird die Restwärme also vorteilhafterweise in einen Wärmepumpenkreislauf eingespeist, über welchen die Prozessluft, insbesondere im Rahmen eines Prozessluftkreislaufs, abgekühlt und erwärmt wird. Dies hat den Vorteil, dass eine Speicherung von Restwärme auch bei geringeren Temperaturen und damit auch bei Waschprogrammen mit geringeren Waschtemperaturen, wie beispielsweise 30 °C, möglich ist. Besonders bevorzugt ist dabei in dem Nebenzweig ein zusätzlicher Verdampfer vorgesehen.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausgestaltungen der Erfindung, die nachfolgend erläutert werden, sind in den Zeichnungen dargestellt. Es zeigt:
- Fig. 1: eine schematische Ansicht eines Waschtrockners mit einer Vorrichtung zur Nutzung der Wärme von Abwasser, entsprechend einer ersten Ausführungsform;
- Fig. 2: eine schematische Darstellung eines Waschtrockners mit einer Vorrichtung zur Nutzung der Wärme von Abwasser, gemäß einer zweiten Ausgestaltungsmöglichkeit;
- Fig. 3: eine schematische Ansicht eines Waschtrockners mit einer Vorrichtung zur Nutzung der Wärme von Abwasser, gemäß einer dritten Ausführungsform; und
- Fig. 4: eine schematische Darstellung eines Waschtrockners, umfassend eine Vorrichtung zur Nutzung der Wärme von Abwasser entsprechend einer vierten Ausgestaltungsmöglichkeit.

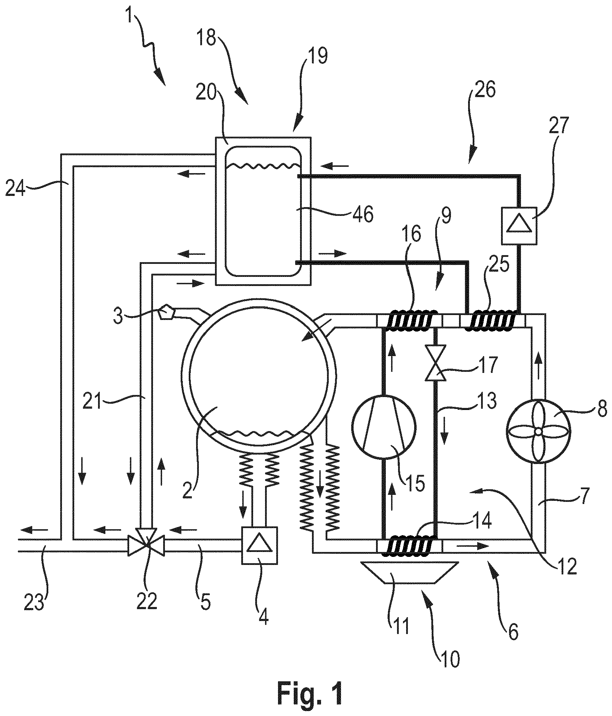

Aus Fig. 1 geht eine schematische Ansicht eines Waschtrockners 1 hervor, welcher eine Wäschetrommel 2 zur Aufnahme von zu behandelnden Wäschestücken aufweist. Dabei können in die Wäschetrommel 2 eingebrachte Wäschestücke zunächst im Rahmen eines Waschprozesses mithilfe von Wasser gereinigt werden, welches, ggf. mit Waschmittel versetzt, über einen Zulauf 3 der Wäschetrommel 2 zugeführt wird. In einzelnen Zyklen eines jeweils gewählten Waschprogramms wird das jeweils zugeführte Wasser zudem über eine - vorliegend nicht weiter dargestellte - Heizeinrichtung auf eine gewünschte Waschtemperatur erwärmt. Zum Ende jedes Zyklus des jeweiligen Waschprogramms wird das Wasser bzw. die Waschlauge des Weiteren als Abwasser über eine Pumpe 4 aus der Wäschetrommel 2 abgepumpt und in eine Hauptabwasserleitung 5 gefördert.

Da der Waschtrockner 1 eine Waschmaschine und einen Wäschetrockner in einem Gerät vereinigt, kann zudem im Anschluss an einen Waschprozess ein Trockenprozess der in der Wäschetrommel 2 befindlichen Wäschestücke durchgeführt werden, um diese auf ein jeweiliges von der Wahl eines Trocknungsprogramms abhängiges Maß zu trocknen. Dabei ist ein Prozessluftkreislauf 6 ausgebildet, indem eine Prozessluftleitung 7 im unteren Bereich der Wäschetrommel 2 von dieser abgeht und in deren oberen Bereich wieder einmündet.

Im Zuge des Trockenprozesses wird Prozessluft innerhalb des Prozessluftkreislaufs 6 mittels eines Gebläses 8 zirkuliert, wobei die Prozessluft vor einem Eintritt in die Wäschetrommel 2 über eine Heizvorrichtung 9 geführt wird, an welcher die Prozessluft vor dem Eintritt in die Wäschetrommel 2 erhitzt wird. Im Folgenden durchströmt die erwärmte Prozessluft dann die Wäschetrommel 2 und gelangt dabei in Kontakt mit der hierin befindlichen feuchten Wäsche, so dass die Prozessluft mit Feuchtigkeit beladen und die Wäschestücke dementsprechend getrocknet werden. Die feuchte Prozessluft wird nach einem Verlassen der Wäschetrommel 2 über eine Kondensationsvorrichtung 10 geleitet, an welcher sie abgekühlt wird, so dass ein Auskondensieren von in der Prozessluft befindlicher Feuchtigkeit stattfindet. Dabei wird das Kondensat über eine Auffangvorrichtung 11 aufgenommen. Im Anschluss hieran erfolgt über das Gebläse 8 wiederum eine Zuführung zu der Heizvorrichtung 9, sowie im weiteren Verlauf zu der Wäschetrommel 2, so dass durch die kontinuierliche Prozessluftführung ein Trocknen der Wäschestücke realisiert wird.

Das Erwärmen und Abkühlen der Prozessluft wird vorliegend mit Hilfe einer Wärmepumpe 12 vollzogen, deren Kältemittelkreislauf 13 zwischen der Heizvorrichtung 9 und der Kondensationsvorrichtung 10 vorgesehen ist. An der durch einen Wärmetauscher 14 gebildeten Kondensationsvorrichtung 10 nimmt Kältemittel des Kältemittelkreislaufs 13 Wärme der vorbeiströmenden Prozessluft auf, so dass diese abgekühlt wird und das gewünschte Auskondensieren von Feuchtigkeit stattfindet. Das hierbei verdampfte Kältemittel wird im Anschluss daran über einen Kompressor 15 zu einem weiteren Wärmetauscher 16 gefördert, der die Heizvorrichtung 9 bildet und an welchem Wärme des Kältemittels auf die Prozessluft vor deren Eintreten in die Wäschetrommel 2 übertragen wird. Das hierbei wieder kondensierende Kältemittel strömt in der Folge über eine Drossel 17 innerhalb des geschlossenen Kältemittelkreislaufs 13 wiederum zurück zum Wärmetauscher 14.

Als Besonderheit verfügt der Waschtrockner 1 nun über eine Vorrichtung 18 zur Nutzung der Wärme von Abwasser, welche dabei entsprechend einer ersten Ausführungsform der Erfindung gestaltet ist. Dabei ist diese Vorrichtung 18 zu dem Zweck vorgesehen, insbesondere in der Anfangsphase eines Trockenprozesses des Waschtrockners 1 den Energieaufwand deutlich zu reduzieren, indem Restwärme des im vorhergehenden Waschprozess angefallenen Abwassers genutzt wird.

Wie in Fig. 1 zu erkennen ist, umfasst die Vorrichtung 18 dabei einen Wärmespeicher 19 in Form eines Abwassersammelbehälters 20, der über eine Abwasserleitung 21 mit der Hauptabwasserleitung 5 verbunden und hierüber mit erwärmtem Abwasser befüllt werden kann. Um dabei die Zuführung von erwärmtem Abwasser zu der Abwasserleitung 21 regeln zu können, ist zwischen der Abwasserleitung 21 und der Hauptabwasserleitung 5 ein Wegeventil 22 vorgesehen, das die Hauptabwasserleitung 5 entweder mit der Abwasserleitung 21 oder einem nachfolgenden Abfluss 23 verbinden, sowie auch eine Verbindung der Abwasserleitung 21 zum Abfluss 23 herstellen kann. Im Deckenbereich des Abwassersammelbehälters 20 zweigt zudem eine Überlaufleitung 24 ab, über die im voll befüllten Zustand des Abwassersammelbehälters 20 weiter zuströmendes Abwasser direkt in den Abfluss 23 abgeführt werden kann.

Restwärme von im Abwassersammelbehälter 20 gespeichertem Abwasser kann nun dem Prozessluftkreislauf 6 an einem Wärmetauscher 25 zugeführt werden, der dabei in Strömungsrichtung der Prozessluft dem Wärmetauscher 16 vorgeschaltet ist. Zur Einspeisung der Restwärme in den Prozessluftkreislauf 6 wird das im Abwassersammelbehälter 20 gespeicherte Abwasser mit Hilfe einer Pumpe 27 in einem Wasserkreislauf 26 zirkuliert und kann dabei an dem Wärmetauscher 25 seine Restwärme an die vorbeiströmende Prozessluft abgeben. Um hierbei allerdings Energie an die Prozessluft übertragen zu können, ist eine entsprechende Wärme des im Abwassersammelbehälters 20 gesammelten Abwassers notwendig, so dass die Speicherung und Zirkulation von Abwasser im Wasserkreislauf 26 sinnvollerweise nur im Anschluss an Waschprozesse des Waschtrockners 1 durchgeführt wird, in welchen eine höhere Waschtemperatur, bevorzugt mindestens 40 °C, als Waschtemperatur gewählt wurde.

Insofern wird der Waschtrockner 1 zur Ausnutzung der Restwärme von Abwasser bevorzugt derartig betrieben, dass zum Ende eines Waschzyklus des Waschprozesses mit ausreichend hoher Waschtemperatur die Waschlauge durch entsprechende Ansteuerung des Wegeventils 22 ausgehend von der Hauptabwasserleitung 5 über die Abwasserleitung 21 in den Abwassersammelbehälter 20 gefördert wird, wobei ein ggf. vorhandener Überschuss an Abwasser dabei über die Überlaufleitung 24 in den Abfluss 23 gelangt. Ist der Waschprozess dann beendet, so wird zu Beginn des Trockenprozesses der in der Wäschetrommel 2 befindlichen Wäschestücke die Pumpe 27 angesteuert und in der Folge das im Abwassersammelbehälter 20 gespeicherte Abwasser über den Wasserkreislauf 26 zirkuliert, so dass dieses am Wärmetauscher 25 seine Restwärme an die vorbeiströmende Prozessluft abgeben kann. In der Folge wird die Prozessluft schon vor Eintritt in den Wärmetauscher 16 um ein gewisses Maß erwärmt. Ist dem gespeicherten Abwasser dann soviel Wärme entzogen, dass eine weitere Wärmeeinbringung in dem Prozessluftkreislauf 6 nicht mehr realisierbar ist, so wird das gespeicherte Abwasser über das Wegeventil 22 in den Abfluss 23 abgeleitet, sowie ein Betrieb der Pumpe 27 beendet.

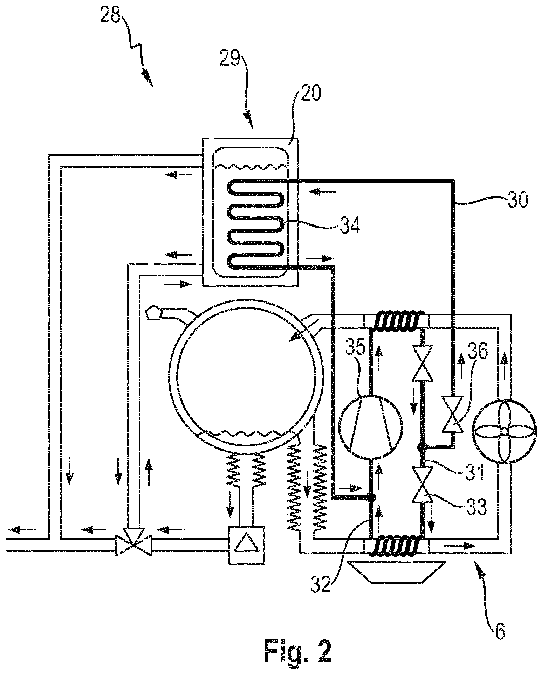

Aus Fig. 2 geht ferner eine schematische Ansicht eines Waschtrockners 28 hervor, welcher eine entsprechend einer zweiten Ausgestaltungsmöglichkeit der Erfindung ausgeführte Vorrichtung 29 zur Nutzung der Wärme von Abwasser aufweist. Der Waschtrockner 28 entspricht dabei im Wesentlichen dem Waschtrockner 1 aus Fig. 1, wobei im Unterschied zu der vorhergehenden Variante der Abwassersammelbehälter 20 mit dem Prozessluftkreislauf 6 über einen Nebenzweig 30 eines Kältemittelkreislaufs 31 verbunden ist.

Ein Hauptzweig 32 dieses Kältemittelkreislaufs 31 ist dabei weitestgehend analog zu dem Kältemittelkreislauf 13 des Waschtrockners 1 aus Fig. 1 gestaltet, wobei der Nebenzweig 30 vor einem Verdampfer 33 des Hauptzweiges 32 von diesem abzweigt, einen Wärmetauscher 34 im Abwassersammelbehälter 20 durchläuft und anschließend vor einem Kompressor 35 wieder in den Hauptzweig 32 einmündet. Unmittelbar nach der Abzweigung aus dem Hauptzweig 32 ist zudem ein weiterer Verdampfer 36 im Nebenzweig 30 vorgesehen.

Die Einspeisung von Restwärme des im Abwassersammelbehälter 20 gespeicherten Abwassers in den Prozessluftkreislauf 6 mit Hilfe des Nebenzweiges 30 des Kältemittelkreislaufs 31 hat dabei den Vorteil, dass auch eine Wärmeeinspeisung bei geringeren Temperaturen des gespeicherten Abwassers möglich ist. Insofern kann gegenüber der Variante nach Fig. 1 auch Restwärme von Abwasser vollzogen werden, welches bei einem Waschprogramm mit niedrigerer Waschtemperatur, wie beispielsweise 30 °C, angefallen ist. Im Übrigen entspricht der Aufbau des Waschtrockners 28 dem der Variante nach Fig. 1, so dass auf das hierzu Beschriebene Bezug genommen wird.

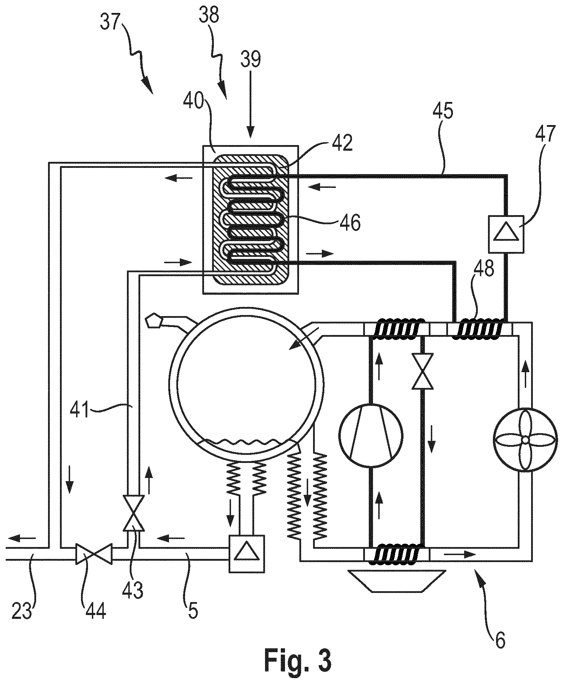

Des Weiteren zeigt Fig. 3 eine schematische Ansicht eines Waschtrockners 37, welcher eine gemäß einer dritten Ausführungsform der Erfindung gestaltete Vorrichtung 38 zur Nutzung der Restwärme von Abwasser aufweist. Dabei entspricht der Waschtrockner 37 im Wesentlichen dem Waschtrockner 1 aus Fig. 1, wobei als Unterschied ein Wärmespeicher 39 der Vorrichtung 38 als latenter Wärmespeicher 40 ausgeführt ist, durch welchen eine von der Hauptabwasserleitung 5 abzweigende Abwasserleitung 41 hindurch verläuft. Der latente Wärmespeicher 40 ist dabei mit einem Speichermedium 42 ausgestattet, bei welchem es sich um ein Phasenwechselmaterial (PCM), wie beispielsweise Paraffin, handelt. Eine Phasenübergangstemperatur dieses Phasenwechselmaterials liegt dabei bevorzugt im Bereich von 40° C, so dass bei Durchleiten von Abwasser aus einem Waschprogramm mit einer Waschtemperatur von mindestens 40° C durch die Abwasserleitung 41 ein Phasenübergang des Speichermediums 42 und damit eine Speicherung der Restwärme des Abwassers als latente Energie stattfindet.

Eine Zuführung von Abwasser zu der Abwasserleitung 41 wird dabei über ein Ventil 43 geregelt, welches alternativ zu einem Ventil 44 betätigt werden kann und in diesem Fall ein Fließen des Abwassers durch den latenten Wärmespeicher 40 hindurch zum Abfluss 23 zur Folge hat. Hingegen wird bei Betätigung des Ventils 44 eine direkte Förderung des Abwassers von der Hauptabwasserleitung 5 in den Abfluss 23 dargestellt.

Eine Einspeisung von Restwärme des Abwassers in den Prozessluftkreislauf 6 wird dabei wiederum über einen Wasserkreislauf 45 vollzogen, welcher im Wesentlichen dem Wasserkreislauf 26 aus Fig. 1 entspricht. Unterschiedlich ist dabei allerdings, dass hierin kein Abwasser, sondern Nutzwasser zirkuliert, welches mit dem latenten Wärmespeicher 40 über einen Wärmetauscher 46 in Wärmeaustausch gebracht werden kann. Wird das Wasser des Wasserkreislaufs über eine Pumpe 47 zirkuliert, so nimmt das Wasser des Wasserkreislaufs 45 am Wärmetauscher 46 Wärme des Speichermediums 42 auf, wodurch dieses mit zunehmender Entladung des latenten Wärmespeichers 40 von einem ersten, insbesondere flüssigen, Aggregatzustand in einen zweiten, insbesondere festen, Aggregatzustand überführt wird. Das somit erwärmte Wasser strömt im Folgenden zu einem Wärmetauscher 48, über welchen es im Wärmeaustausch mit der Prozessluft des Prozessluftkreislaufs 6 steht. Im Übrigen entspricht die Ausgestaltung nach Fig. 3 der Variante nach Fig. 1, so dass auf das hierzu Beschriebene Bezug genommen wird.

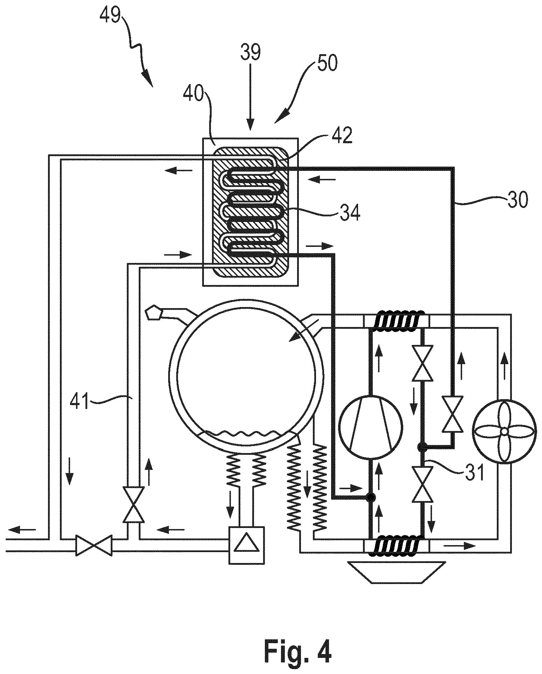

Schließlich geht aus Fig. 4 noch eine schematische Darstellung eines Waschtrockners 49 mit einer erfindungsgemäßen Vorrichtung 50 entsprechend einer vierten Ausgestaltungsmöglichkeit der Erfindung hervor. Dabei handelt es sich bei dem Waschtrockner 49 im Wesentlichen um eine Kombination der Varianten aus Fig. 2 und Fig. 3, indem die Vorrichtung 50 im Unterschied zu der Variante nach Fig. 2 mit einem latenten Wärmespeicher 40 ausgestattet ist, durch welchen analog zu der Ausführung nach Fig. 3 eine Abwasserleitung 41 hindurchgeführt ist.

Allerdings ist die Koppelung dieses latenten Wärmespeichers 40 mit dem Prozessluftkreislauf 6 über einen Nebenzweig 30 eines Kältemittelkreislaufs 31 hergestellt, welcher analog zu der Ausführungsform nach Fig. 2 gestaltet ist. Da insofern eine Entladung des latenten Wärmespeichers 50 an einem Wärmetauscher 34 durch Wärmeübertragung auf Kältemittel des Nebenzweiges 30 vollzogen wird, kann eine Phasenübergangstemperatur des Speichermediums 42 niedriger gewählt werden, so dass auch eine Beladung des latenten Wärmespeichers 40 bereits mit Abwasser eines Waschprogramms geringerer Temperatur durchführbar ist.

Mittels der erfindungsgemäßen Ausgestaltungen einer Vorrichtung kann die Restwärme von Abwasser zur Erwärmung von Prozessluft für einen Trockenprozess genutzt werden.

### Bezugszeichen

- 1: Waschtrockner
- 2: Wäschetrommel
- 3: Wasserzulauf
- 4: Pumpe
- 5: Hauptabwasserleitung
- 6: Prozessluftkreislauf
- 7: Prozessluftleitung
- 8: Gebläse
- 9: Heizvorrichtung
- 10: Kondensationsvorrichtung
- 11: Auffangvorrichtung
- 12: Wärmepumpe
- 13: Kältemittelkreislauf
- 14: Wärmetauscher
- 15: Kompressor
- 16: Wärmetauscher
- 17: Drossel
- 18: Vorrichtung
- 19: Wärmespeicher
- 20: Abwassersammelbehälter
- 21: Abwasserleitung
- 22: Wegeventil
- 23: Abfluss
- 24: Überlaufleitung
- 25: Wärmetauscher
- 26: Wasserkreislauf
- 27: Pumpe
- 28: Waschtrockner
- 29: Vorrichtung
- 30: Nebenzweig
- 31: Kältemittelkreislauf
- 32: Hauptzweig
- 33: Verdampfer
- 34: Wärmetauscher
- 35: Kompressor
- 36: Verdampfer
- 37: Waschtrockner
- 38: Vorrichtung
- 39: Wärmespeicher
- 40: Latenter Wärmespeicher
- 41: Abwasserleitung
- 42: Speichermedium
- 43: Ventil
- 44: Ventil
- 45: Wasserkreislauf
- 46: Wärmetauscher
- 47: Pumpe
- 48: Wärmetauscher
- 49: Waschtrockner
- 50: Vorrichtung

## Patentansprüche

1. Vorrichtung (18; 29; 38; 50) zur Nutzung der Wärme von Abwasser einer Wäschebehandlungsmaschine, umfassend einen Wärmespeicher (19; 39), welcher mit einer Abwasserleitung (21; 41) verbunden ist, wobei dem Wärmespeicher (19; 39) über die Abwasserleitung (21; 41) erwärmtes Abwasser zuführbar und dessen Restwärme in dem Wärmespeicher (19, 39) speicherbar ist, **dadurch gekennzeichnet, dass** im Zuge eines auf einen Waschprozess folgenden Trockenprozess der Wärmespeicher (19; 39) mit einer Prozessluftleitung (7) in einer eine Wärmeleitung ermöglichenden Verbindung steht, um gespeicherte Restwärme in Prozessluft einzuleiten.

2. Vorrichtung (18; 29) nach Anspruch 1, **dadurch gekennzeichnet, dass** der Wärmespeicher (19) durch einen Abwassersammelbehälter (20) gebildet ist, in welchen die Abwasserleitung (21) einmündet und in dem das erwärmte Abwasser speicherbar ist.

3. Vorrichtung (38; 50) nach Anspruch 1, **dadurch gekennzeichnet, dass** der Wärmespeicher (39) durch einen latenten Wärmespeicher (40) mit einem Speichermedium (42) gebildet ist, durch welchen die Abwasserleitung (41) hindurchgeführt ist, wobei Restwärme von Abwasser durch das Speichermedium (42) speicherbar ist.

4. Vorrichtung (18; 38) nach Anspruch 1, **dadurch gekennzeichnet, dass** die Verbindung zwischen dem Wärmespeicher (19; 39) und der Prozessluftleitung (7) über einen Wasserkreislauf (26; 45) hergestellt ist, welcher mit der Prozessluftleitung (7) über einen Wärmetauscher (25; 48) in Verbindung steht.

5. Vorrichtung (29; 50) nach Anspruch 1, **dadurch gekennzeichnet, dass** die Verbindung zwischen dem Wärmespeicher (19; 39) und der Prozessluftleitung (7) über einen Kältemittelkreislauf (31) einer Wärmepumpe hergestellt ist.

6. Vorrichtung (29; 50) nach Anspruch 5, **dadurch gekennzeichnet, dass** der Wärmespeicher (19; 39) mit einem Nebenzweig (30) des Kältemittelkreislaufs (31) verbunden ist, welcher vor einem Verdampfer (33) von einem Hauptzweig (32) abzweigt und vor einem Kompressor (35) wieder in den Hauptzweig (32) einmündet.

7. Waschtrockner (1; 28; 37; 49), umfassend eine Wäschetrommel (2), in welcher Wäschestücke für eine Behandlung in einem Wasch-, sowie einem anschließenden Trocknungsprozess aufnehmbar sind, wobei eine Vorrichtung (18; 29; 38; 50) nach einem oder mehreren der Ansprüche 1 bis 6 vorgesehen ist, über welche Restwärme von Abwasser des Waschprozesses für eine Erwärmung von Prozessluft des Trocknungsprozesses nutzbar ist.

8. Waschtrockner (1; 28; 37; 49) nach Anspruch 7, **dadurch gekennzeichnet, dass** die Abwasserleitung (21; 41), mit welcher der Wärmespeicher (19; 39) der Vorrichtung (18; 29; 38; 50) verbunden ist, von einer Hauptabwasserleitung (5) abzweigt, wobei die Zuführung von Abwasser zu der Abwasserleitung (21; 41) aus der Hauptabwasserleitung (5) über mindestens ein Ventil (22; 43) regelbar ist.

9. Verfahren zum Betreiben eines Waschtrockners (1; 28; 37; 49), wobei warmes Abwasser nach einem Waschprozess von in einer Wäschetrommel (2) aufgenommenen Wäschestücken aus der Wäschetrommel (2) abgepumpt und zu einem Wärmespeicher (19; 39) einer Vorrichtung (18; 29; 38; 50) gefördert wird, in welchem Restwärme des Abwassers gespeichert wird, **dadurch gekennzeichnet, dass** die gespeicherte Restwärme im Zuge eines auf den Waschprozess folgenden Trockenprozess Prozessluft zugeführt wird, bevor diese zum Trocknen der Wäschestücke durch die Wäschetrommel (2) hindurchgeführt wird.

10. Verfahren nach Anspruch 9, **dadurch gekennzeichnet, dass** das Abwasser dann nach Entzug der Wärme durch den Wärmespeicher (19; 39) oder aber spätestens am Ende des Trockenprozesses abgepumpt wird.

## Claims

1. Device (18; 29; 38; 50) for utilising the heat from waste water in a laundry treatment machine, comprising a heat reservoir (19; 39) that is connected to a waste water pipe (21; 41), wherein heated waste water can be fed to the heat reservoir (19; 39) via the waste water pipe (21; 41), and the residual heat thereof can be stored in the heat reservoir (19; 39), **characterised in that** in the course of a drying process following on from a washing process the heat reservoir (19; 39) is connected to a process air line (7) in a manner that permits heat conduction, in order for stored residual heat to be introduced into process air.

2. Device (18; 29) according to claim 1, **characterised in that** the heat reservoir (19) is formed by a waste water collection container (20), into which the waste water pipe (21) opens and in which the heated waste water can be stored.

3. Device (38; 50) according to claim 1, **characterised in that** the heat reservoir (39) is formed by a latent heat reservoir (40) with a storage medium (42), through which the waste water pipe (41) is guided, wherein residual heat from waste water can be stored by the storage medium (42).

4. Device (18; 38) according to claim 1, **characterised in that** the connection between the heat reservoir (19; 39) and the process air line (7) is created via a water circuit (26; 45) which is connected to the process air line (7) via a heat exchanger (25; 48).

5. Device (29; 50) according to claim 1, **characterised in that** the connection between the heat reservoir (19; 39) and the process air line (7) is created via a coolant circuit (31) of a heat pump.

6. Device (29; 50) according to claim 5, **characterised in that** the heat reservoir (19; 39) is connected to a secondary branch (30) of the coolant circuit (31), which upstream of an evaporator (33) branches off from a main branch (32) and opens into the main branch (32) again upstream of a compressor (35).

7. Washer-dryer (1; 28; 37; 49) comprising a laundry drum (2) in which laundry items can be received for treatment in a washing process and a subsequent drying process, wherein a device (18; 29; 38; 50) is provided according to one or more of claims 1 to 6, via which residual heat from waste water in the washing process can be used for heating process air for the drying process.

8. Washer-dryer (1; 28; 37; 49) according to claim 7, **characterised in that** the waste water pipe (21; 41) to which the heat reservoir (19; 39) of the device (18; 29; 38; 50) is connected branches off from a main waste water pipe (5), wherein the feed of waste water to the waste water pipe (21; 41) from the main waste water pipe (5) can be regulated via at least one valve (22; 43).

9. Method for operating a washer-dryer (1; 28; 37; 49), wherein after a washing process warm waste water is pumped out of the laundry drum (2) from laundry items received in a laundry drum (2) and is conveyed to a heat reservoir (19; 39) of a device (18; 29; 38; 50) in which residual heat from the waste water is stored, **characterised in that** the stored residual heat is fed to process air in the course of a drying process following on from the washing process, before it is guided through the laundry drum (2) in order to dry the laundry items.

10. Method according to claim 9, **characterised in that** the waste water is then pumped out after removal of the heat by the heat reservoir (19; 39), but no later than at the end of the drying process.

## Revendications

1. Dispositif (18 ; 29 ; 38 ; 50) afin d'utiliser la chaleur des eaux usées d'une machine de traitement du linge, comprenant un accumulateur de chaleur (19 ; 39), lequel est relié à un conduit d'eaux usées (21 ; 41), dans lequel des eaux usées chauffées peuvent être amenées à l'accumulateur de chaleur (19 ; 39) via le conduit d'eaux usées (21 ; 41) et sa chaleur résiduelle peut être emmagasinée dans l'accumulateur de chaleur (19, 39), **caractérisé en ce qu'** au cours d'un processus de séchage suivant un processus de lavage, l'accumulateur de chaleur (19 ; 39) est relié à un conduit d'air de processus (7) d'une façon permettant une conduction thermique, afin d'introduire dans l'air de processus la chaleur résiduelle accumulée.

2. Dispositif (18 ; 29) selon la revendication 1, **caractérisé en ce que** l'accumulateur de chaleur (19) est constitué par un réservoir collecteur d'eaux usées (20) dans lequel le conduit d'eaux usées (21) débouche et dans lequel les eaux usées chauffées peuvent être emmagasinées.

3. Dispositif (38 ; 50) selon la revendication 1, **caractérisé en ce que** l'accumulateur de chaleur (39) est constitué par un accumulateur de chaleur latent (40) avec un support d'emmagasinage (42) à travers lequel le conduit d'eaux usées (41) est introduit, la chaleur résiduelle des eaux usées pouvant être emmagasinée par le support d'emmagasinage (42).

4. Dispositif (18 ; 38) selon la revendication 1, **caractérisé en ce que** la liaison entre l'accumulateur de chaleur (19 ; 39) et le conduit d'air de processus (7) est établi par le biais d'un circuit hydraulique (26 ; 45) relié au conduit d'air de processus (7) via un échangeur de chaleur (25 ; 48).

5. Dispositif (29 ; 50) selon la revendication 1, **caractérisé en ce que** la liaison entre l'accumulateur de chaleur (19 ; 39) et le conduit d'air de processus (7) est établi par le biais d'un circuit d'agent frigorifique (31) d'une pompe à chaleur.

6. Dispositif (29 ; 50) selon la revendication 5, **caractérisé en ce que** l'échangeur de chaleur (19 ; 39) est relié à une branche secondaire (30) du circuit d'agent frigorifique (31), laquelle se détache d'une branche principale (32) avant un évaporateur (33) et débouche à nouveau dans la branche principale (32) avant un compresseur (35).

7. Sèche-linge (1 ; 28 ; 37 ; 49) comprenant un tambour à linge (2) servant à accueillir le linge en vue d'un traitement lors d'un processus de lavage et ensuite de séchage, dans lequel un dispositif (18 ; 29 ; 38 ; 50) selon l'une ou plusieurs des revendications 1 à 6 est prévu, via lequel la chaleur résiduelle des eaux usées du processus de lavage peut être utilisée afin de chauffer l'air de processus du processus de séchage.

8. Sèche-linge (1 ; 28 ; 37 ; 49) selon la revendication 7, **caractérisé en ce que** le conduit d'eaux usées (21 ; 41) auquel l'accumulateur de chaleur (19 ; 39) du dispositif (18 ; 29 ; 38 ; 50) est relié se détache d'un conduit d'eaux usées principal (5), l'adjonction d'eaux usées au conduit d'eaux usées (21 ; 41) au départ du conduit d'eaux usées principal (5) étant régulable via au moins une soupape (22 ; 43).

9. Procédé d'exploitation d'un sèche-linge (1 ; 28 ; 37 ; 49) dans lequel les eaux usées chaudes sont, après un processus de lavage du linge introduit dans un tambour à linge (2), pompées hors du tambour à linge (2) et menées vers un accumulateur de chaleur (19 ; 39) d'un dispositif (18 ; 29 ; 38 ; 50) dans lequel la chaleur résiduelle des eaux usées est emmagasinée, **caractérisé en ce que** la chaleur résiduelle emmagasinée est adjointe à l'air de processus au cours d'un processus de séchage suivant le processus de lavage, avant le passage de cet air à travers le tambour à linge (2) afin de sécher le linge.

10. Procédé selon la revendication 9, **caractérisé en ce que** les eaux usées sont ensuite pompées après prélèvement de la chaleur par l'accumulateur de chaleur (19 ; 39) ou au plus tard à la fin du processus de séchage.
